# EUROPEAN PATENT APPLICATION

(11) **EP 4 660 035 A1**
(43) Date of publication of application: **10.12.2025**
(21) Application number: 23919660.3
(22) Date of filing: 31.01.2023
(51) Int. Cl.: B60W 30/06

(54) **PARKING ASSISTANCE METHOD AND PARKING ASSISTANCE DEVICE**

(71) Applicant: Nissan Motor Co., Ltd., Kanagawa 221-0023 (JP)
(72) Inventor: SUZUKI, Yasuhiro, Atsugi-shi, Kanagawa 243-0123 (JP); MATSUMOTO, Manato, Atsugi-shi, Kanagawa 243-0123 (JP)
(74) Representative: Grünecker Patent- und Rechtsanwälte PartG mbB
(86) International application number: PCT/JP2023/003101
(87) International publication number: WO 2024/161520

(57) **Abstract**

A parking assistance ECU (50) recalculates an orientation of a target parking space with respect to a vehicle while the vehicle is moving along a target traveling trajectory; calculates an amount of orientation deviation between the recalculated orientation of the target parking space and the orientation of the target parking space before the recalculating; corrects, based on an amount of orientation correction for the amount of orientation deviation, the orientation of the target parking space so as to bring the orientation of the target parking space closer to the recalculated orientation of the target parking space from the orientation of the target parking space before the recalculating; updates the target traveling trajectory to a traveling trajectory from a current position to the corrected target parking space; and assists in parking the vehicle along the updated target traveling trajectory. A ratio of the amount of orientation correction to the amount of orientation deviation is smaller as a remaining distance from the current position to the target parking space is longer.

## Description

### Technical Field

The present invention relates to a parking assistance method and a parking assistance device.

### Background Art

A technology is known in which, after a vehicle starts autonomous driving, each time the straight-line distance from the vehicle to a target parking area becomes shorter, the parking area is re-recognized, and the vehicle position and vehicle orientation of the vehicle are recalculated to control the vehicle's traveling.

### Prior Art Document

### Patent Document

Patent Document 1: Japanese Patent Application Publication No. 2012-84021

### Summary of Invention

### Problems to be Solved by Invention

However, the technology described in Patent Document 1 has a problem in that when the distance from the vehicle to the target parking space is long and the amount of orientation correction of the vehicle with respect to the parking space after re-recognition is large, the steering control of the vehicle results in rapid steering.

A problem to be solved by the present invention is to provide a parking assistance method and a parking assistance device that can avoid rapid steering in the steering control of a vehicle even when a distance from the vehicle to a parking space is long when correcting the vehicle orientation with respect to the parking space after re-recognition.

### Means for Solving Problems

The present invention solves the above problem by: recalculating an orientation of a target parking space while a vehicle is moving along a target traveling trajectory; calculating an amount of orientation deviation between the recalculated orientation of the target parking space and the orientation of the target parking space before the recalculating; correcting, based on an amount of orientation correction for the amount of orientation deviation, the orientation of the target parking space so as to bring the orientation of the target parking space closer to the recalculated orientation of the target parking space from the orientation of the target parking space before the recalculating; assisting in parking the vehicle along the target traveling trajectory from a current position to the corrected target parking space, wherein a ratio of the amount of orientation correction to the amount of orientation deviation is smaller as a remaining distance from the current position to the target parking space is longer.

### Effects of Invention

According to the present invention, it is possible to avoid rapid steering in the steering control of a vehicle even when a distance from the vehicle to a parking space is long when correcting the vehicle orientation with respect to the parking space after re-recognition.

### Brief Description of Drawings

FIG. 1 is a block diagram illustrating a configuration of a parking assistance device according to an embodiment of the present invention.
FIG. 2 illustrates an example of calculation of a target traveling trajectory to a re-recognized target parking space, performed by a conventional parking assistance method.
FIG. 3 illustrates an example of a relationship between a remaining distance and weightings for position correction and orientation correction.
FIG. 4A illustrates an example of calculation of a target traveling trajectory performed by a parking assistance method of the present embodiment.
FIG. 4B illustrates an example of calculation of a target traveling trajectory performed by a parking assistance method of the present embodiment.
FIG. 5 is a flowchart illustrating a control procedure of the parking assistance method according to the present embodiment.

### Mode(s) for Carrying out the Invention

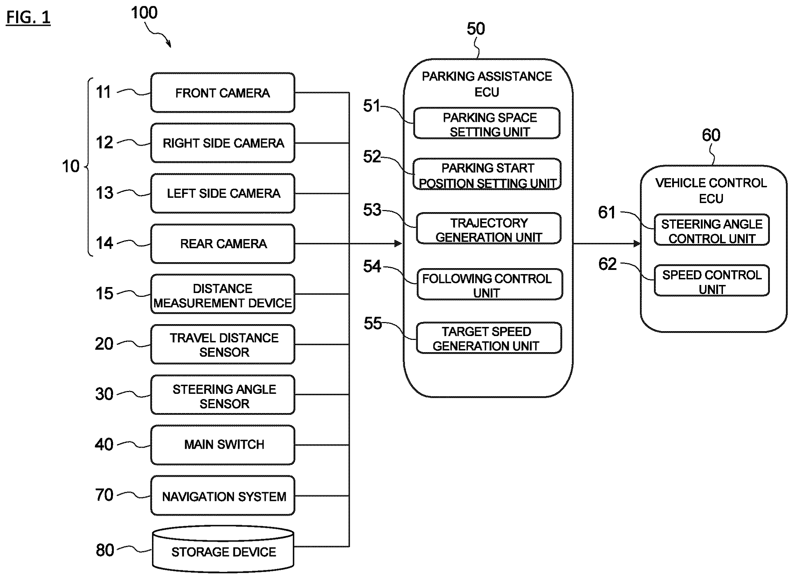

An embodiment of the present invention will be described below with reference to the drawings. FIG. 1 is a block diagram illustrating a configuration of a parking assistance device 100 according to an embodiment of the present invention. The parking assistance device 100 of the present embodiment is mounted on a vehicle to assist in the operation of moving (parking) the vehicle into a parking space. Note that the parking assistance device 100 may perform parking operations of the vehicle by remote control. For example, an occupant of the vehicle may input an instruction to start parking assistance to a remote operation device such as a remote controller or a mobile terminal outside the vehicle, thereby performing a parking operation of the vehicle.

The parking assistance device 100 of the present embodiment includes a camera group 10, a distance measurement device 15, a travel distance sensor 20, a steering angle sensor 30, a main switch 40, a parking assistance ECU 50, a vehicle control ECU 60, and a navigation system 70. Note that the parking assistance device 100 also includes a group of hardware that is typically mounted on the vehicle, such as an engine control ECU and a steering power assistance ECU (not illustrated). These components are connected to each other via a CAN or other in-vehicle LAN in order to transmit and receive information to each other.

The camera group 10 includes, for example, a front camera 11, a right side camera 12, a left side camera 13, and a rear camera 14, as illustrated. The front camera 11 is installed on or near the front bumper of the vehicle, captures an image of an area in front of the vehicle, and outputs image information to the parking assistance ECU 50. The right side camera 12 is installed on the right side of the vehicle (e.g., the front right side of the vehicle), captures an image of an area on the right side of the vehicle, and outputs image information to the parking assistance ECU 50. The left side camera 13 is installed on the left side of the vehicle (e.g., the front left side of the vehicle), captures an image of an area on the left side of the vehicle, and outputs image information to the parking assistance ECU 50. The rear camera 14 is installed on or near the rear bumper of the vehicle, captures an image of an area in rear of the vehicle, and outputs image information to the parking assistance ECU 50.

The distance measurement device 15 is a radar device such as a millimeter wave radar, laser radar, or ultrasonic radar, or sonar, and is installed in the same position as the cameras 11 to 14 to detect the presence or absence of obstacles, pedestrians, other vehicles, and the like around the vehicle, their positions, and the distances to them.

The travel distance sensor 20 calculates an amount of travel of the vehicle and outputs the amount of travel to the parking assistance ECU 50. The travel distance sensor 20 can be configured using, for example, a rotation speed sensor that detects the number of rotations of the wheels of the vehicle.

The steering angle sensor 30 is installed, for example, inside a steering column, to detect the rotation angle of the steering wheel, and outputs the detected rotation angle to the parking assistance ECU 50.

The main switch 40 is a switch that is operated by the user to instruct the start of parking assistance. When not operated, the main switch 40 outputs an OFF signal to the parking assistance ECU 50, and when operated, the main switch 40 outputs an ON signal to the parking assistance ECU 50. This main switch 40 is installed, for example, on a remote control device such as a remote controller or a mobile terminal, which is held by an occupant who operates the device remotely outside the vehicle, or in a position where the driver can operate it from inside the vehicle, such as near the instrument panel or near the steering wheel of the vehicle. Note that the main switch 40 may be a software switch provided on the screen of a mobile terminal such as a smartphone that can communicate with the vehicle via a network, or a software switch provided on the screen of a navigation device.

The parking assistance ECU 50 is a controller that performs overall control of the parking assistance device 100. The parking assistance ECU 50 includes a ROM in which a parking assistance program is stored, a CPU serving as an operating circuit that functions as the parking assistance device 100 of the present embodiment by executing the program stored in the ROM, and a RAM that functions as an accessible storage device. This parking assistance ECU 50 receives detection information from the camera group 10, the distance measurement device 15, the travel distance sensor 20, the steering angle sensor 30, and the main switch 40, calculates a target steering angle and a target vehicle speed for the vehicle, and outputs them to the vehicle control ECU 60. The parking assistance ECU 50 corresponds to a controller in the claims.

The parking assistance ECU 50 includes, as functional blocks, a parking space setting unit 51, a parking start position setting unit 52, a trajectory generation unit 53, a following control unit 54, and a target speed generation unit 55, to implement their functions through cooperation between software for performing their processing and hardware. In the present embodiment, the parking assistance ECU 50 calculates a target traveling trajectory from the current position of the vehicle to a target parking space where the vehicle is to be parked, and assists in parking the vehicle along the target traveling trajectory. The parking assistance ECU 50 re-recognizes the target parking space in real time while the vehicle is moving along the target traveling trajectory to the target parking space. When the position and/or orientation of the target parking space changes, the parking assistance ECU 50 corrects the position and/or orientation of the target parking space, and calculates a new target traveling trajectory to the corrected target parking space. Details of processing performed by the parking assistance ECU 50 will be described later.

The vehicle control ECU 60 is a controller that controls the driving of the vehicle. The vehicle control ECU 60 includes a ROM in which a vehicle drive control program is stored, a CPU serving as an operating circuit that functions as a vehicle control device by executing the program stored in the ROM, and a RAM that functions as an accessible storage device. The vehicle control ECU 60 receives the target vehicle speed and the target steering angle of the vehicle from the parking assistance ECU 50, and controls the driving of the vehicle in cooperation with the engine control ECU and the steering power assistance ECU. The vehicle control ECU 60 includes, as functional blocks, a steering angle control unit 61 and a speed control unit 62. The steering angle control unit 61 controls the steering angle of the vehicle so as to achieve the target steering angle. Further, the speed control unit 62 controls the speed of the vehicle so as to achieve the target speed.

Furthermore, the navigation system 70 estimates the current position of the vehicle and outputs it to the parking assistance ECU 50. Examples of processing of estimating the current position include measuring the current position of the vehicle using GPS, acquiring the current position through road-to-vehicle communication, and calculating the current position based on the amount of steering and the amount of accelerator operation. Further, a storage device 80 is a recording medium that stores information on parking positions where the vehicle has been parked in the past. The information on parking positions is overhead images including the surrounding conditions of the parking positions. The parking positions where the vehicle has been parked in the past include, for example, a parking space at the occupant's home and a parking lot at the occupant's workplace. The stored information on parking positions is output to the parking assistance ECU 50.

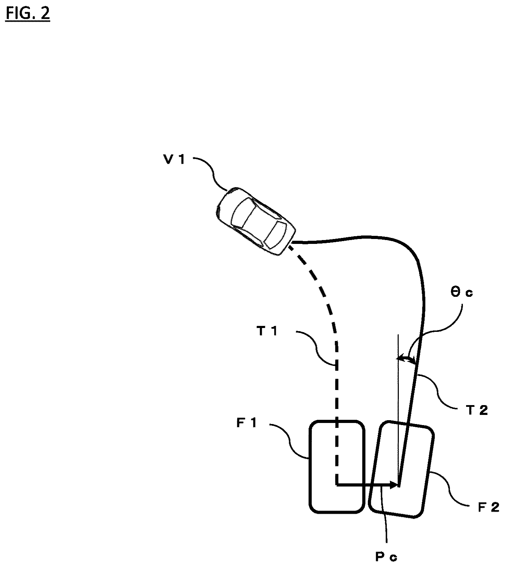

A conventional parking assistance method will now be described with reference to FIG. 2. FIG. 2 illustrates an example of calculation of a target traveling trajectory to a re-recognized target parking space, performed by the conventional parking assistance method. Conventionally, while a vehicle V1 is moving along a target traveling trajectory T1 to a target parking space F1, the target parking space is re-recognized at a constant cycle. As illustrated in FIG. 2, when the re-recognized target parking space (updated target parking space) is a target parking space F2, the position of the target parking space F2 is deviated by an amount of position deviation Pc from the position of the target parking space F1. Further, the orientation of the target parking space F2 is deviated by an amount of orientation deviation θc with respect to the orientation of the target parking space F1. In the conventional technology, when the target parking space is updated to the target parking space F2, a new target traveling trajectory T2 from the current position of the vehicle V1 to the target parking space F2 is calculated. At this time, as illustrated in FIG. 2, in the conventional parking assistance method, there is a problem that the steering control of the vehicle V1 following the target traveling trajectory T2 results in rapid steering when the amount of deviation correction in the orientation of the vehicle V1 becomes large in order for the vehicle V1 to move along the target traveling trajectory T2.

In contrast, in the present embodiment, as described below, the amount of correction for the deviation in position and/or orientation of the re-recognized target parking space is adjusted depending on the remaining distance from the vehicle to the target parking space, thereby avoiding rapid steering in the steering control of the vehicle. The functions of the parking assistance ECU will be described below.

The parking space setting unit 51 sets a target parking space where the vehicle is to be parked. For example, the parking space setting unit 51 sets a target parking space using an image captured by a camera. The parking space setting unit 51 detects available parking spaces in the parking lot from the images captured by the cameras 11 to 14.

In the processing of detecting parking spaces, the parking space setting unit 51 first generates an overhead image from the images captured by the cameras 11 to 14, and detects available parking spaces from this overhead image. For example, the parking space setting unit 51 detects, as an available parking space, an empty space with a predetermined range (size) included in the overhead image. The empty space is a space where any obstacles are not present such as parked vehicles. The predetermined range is, for example, a range with a size necessary for the vehicle to be properly parked. Based on distance measurement information (reflection point information) from the distance measurement device 15, the parking space setting unit 51 determines whether or not there are any obstacles on a path for parking in an empty space, and detects an empty space without any obstacles as an available parking space.

Further, the parking space setting unit 51 may detect available parking spaces by detecting candidates for frame lines each defining a parking frame from the overhead image. The parking space setting unit 51 determines whether or not the detected candidate frame lines satisfy determination conditions regarding the distance from other frame lines, the relative angle from other frame lines, the length, and so on, and detects a space partitioned by a candidate frame line that satisfies the determination conditions as a parking frame. Note that it is not necessary to generate an overhead image from the images captured by the cameras 11 to 14 and detect a parking frame from the overhead image. For example, information on a parking space may be acquired through communication with the outside of the vehicle, such as so-called road-to-vehicle communication or vehicle-to-vehicle communication. In the processing of detecting available parking spaces, the parking space setting unit 51 determines whether or not there is an obstacle such as a parked vehicle inside a detected parking frame and on a path for parking in that parking frame based on the distance measurement information (reflection point information) from the distance measurement device 15, and detects a parking frame without any obstacles as an available parking space. Note that it is not necessary to detect available parking spaces based on the distance measurement information from the distance measurement device 15. Available parking spaces may be detected from images captured by the cameras 11 to 14 or cameras installed in the parking lot, and information on available parking spaces may be further acquired from a parking lot management center.

Next, the parking space setting unit 51 detects a parking space recommended to the occupant of the vehicle (hereinafter, referred to as a recommended parking space) from among the available parking spaces, and presents the parking space to the occupant of the vehicle. Examples of the processing of detecting a recommended parking space include determining as the recommended parking space an available parking space that requires the shortest time to park among the available parking spaces, and determining as the recommended parking space an available parking space that is closest to the driver's gaze point of the vehicle. In the processing of presenting a recommended parking space, an overhead image of a plurality of parking spaces including the recommended parking space is displayed on a display.

Next, the parking space setting unit 51 receives a designation of a target parking space by the occupant of the vehicle, and sets the designated parking space as the target parking space. The target parking space can be designated, for example, by the occupant touching the recommended parking space displayed on a touch panel display, or by the occupant using an operation key to move a cursor displayed on the display to the recommended parking space displayed on the display and then operating a determination button. The parking space setting unit 51 acquires information on the set target parking space. The information on the target parking space includes the position and orientation of the target parking space. The position of the target parking space is the center position of the target parking space. Further, the orientation of the target parking space is the depth direction of the target parking space.

Furthermore, the setting of the parking space is not limited to using a camera, and the setting of the parking space may be based on information on parking positions stored in the past. The parking space setting unit 51 acquires information on a pre-registered target parking position, and sets a target parking space at the acquired target parking position. For example, the parking space setting unit 51 acquires an overhead image including the surrounding conditions of the parking position from the storage device 80, and sets the target parking space to an available parking space at the parking position included in the overhead image. The parking space setting unit 51 determines whether or not the vehicle has reached the parking start position based on instruction information from the occupant via the main switch 40, and if it is determined that the vehicle has reached the parking start position, acquires an overhead image including the parking start position and the surrounding conditions of the parking position. Note that instead of the designation by the occupant via the main switch 40, information on the parking position may be pre-registered in the navigation system 70, and the vehicle's position information obtained from a GPS signal or the like may be referenced to determine whether or not the vehicle has reached the parking start position, and the determination result may be presented to the occupant. For example, when the vehicle comes within a certain distance in a straight line from the parking position, it is determined that the vehicle has reached the parking start position.

Further, in the present embodiment, after the vehicle starts a parking operation, while the vehicle is moving along the target traveling trajectory, the parking space setting unit 51 re-recognizes the target parking space. The method for re-recognizing the target parking space is the same as the above-described method for detecting the target parking space. For example, the parking space setting unit 51 uses the cameras 11 to 14 to re-recognize the target parking space for the vehicle at a constant cycle, and recalculate the position and orientation of the re-recognized target parking space. The parking space setting unit 51 updates the target parking space to the re-recognized target parking space. Specifically, the parking space setting unit 51 updates the position of the target parking space to the position of the re-recognized target parking space, and updates the orientation of the target parking space to the orientation of the re-recognized target parking space. Note that in the present embodiment, both the position and the orientation of the target parking space are recalculated, but it is also possible to recalculate either the position or the orientation of the target parking space.

The parking space setting unit 51 calculates an amount of deviation between the recalculated target parking space and the target parking space before the recalculating. The amount of deviation in target parking space includes the amount of position deviation of the target parking space and the amount of orientation deviation of the target parking space. The amount of position deviation is a distance between the center position of the target parking space before the recalculating and the center position of the recalculated target parking space. The amount of orientation deviation is an angle between the center line in the depth direction of the target parking space before the recalculating and the center line in the depth direction of the recalculated target parking space. The target parking space before the recalculating is the target parking space that was set before the start of parking the vehicle. The recalculated target parking space is the re-recognized target parking space.

In the present embodiment, the parking space setting unit 51 sets a target parking space before the start of parking the vehicle. After the start of parking the vehicle, while the vehicle is moving along the target traveling trajectory to the target parking space, the parking space setting unit 51 repeats the processing of updating the target parking space at a constant cycle. The constant cycle is, for example, a period during which the vehicle moves 25 cm. Alternatively, the constant cycle may be, for example, two or three times per second. In the processing of updating, the target parking space is re-recognized to update the target parking space. Therefore, the parking space setting unit 51 may perform the processing of updating a plurality of times during the parking operation of the vehicle. In such a case, the target parking space before updating is the target parking space that was re-recognized in the previous processing of updating. Further, the updated target parking space is the target parking space that has been re-recognized in the current processing of updating. Thus, the parking space setting unit 51 calculates an amount of deviation between the target parking space re-recognized in the previous processing of updating and the target parking space re-recognized in the current processing of updating. Further, the target parking space before updating may be the target parking space that was set before the start of parking the vehicle.

Further, the parking space setting unit 51 is not limited to performing the processing of updating the target parking space at a constant cycle, but may perform the processing of updating the target parking space when the amount of deviation in target parking space is equal to or greater than a predetermined amount of deviation. For example, the parking space setting unit 51 determines whether or not the amount of position and/or orientation deviation of the target parking space is equal to or greater than a predetermined amount of deviation, and if it is determined that the amount of position and/or orientation deviation of the target parking space is equal to or greater than the predetermined amount of deviation, performs the processing of updating the target parking space.

The parking space setting unit 51 calculates an amount of correction for the amount of deviation in target parking space depending on the remaining distance. The amount of correction includes an amount of position correction of the target parking space and/or an amount of orientation correction of the target parking space. The remaining distance is a distance from the current position of the vehicle to the updated target parking space or the target parking space before updating. For example, when the target parking space is updated, the parking space setting unit 51 acquires the current position of the vehicle at that time, and calculates a straight-line distance from the current position of the vehicle to the position of the updated target parking space. In the present embodiment, the amount of correction is a value in a range equal to or less than the amount of deviation. For example, the value of the amount of correction ranges from 1/10 of the amount of deviation to the amount of deviation. In other words, the parking space setting unit 51 calculates the amount of correction depending on the remaining distance within a range equal to or less than the amount of deviation.

An example of a method for calculating an amount of orientation correction will now be described. The parking space setting unit 51 calculates an amount of orientation correction such that the ratio of the amount of orientation correction to the amount of orientation deviation is smaller as the remaining distance is longer. For example, the parking space setting unit 51 may calculate an amount of orientation correction to be smaller in proportion to the remaining distance being longer. Further, the parking space setting unit 51 may determine whether or not the remaining distance is longer than a predetermined second distance threshold value, and when the remaining distance is longer than the predetermined second distance threshold value, calculate a smaller amount of orientation correction than when the remaining distance is shorter than the predetermined second distance threshold value. The second distance threshold value may be set in a plurality of levels, rather than in one level.

In this way, in the present embodiment, when the vehicle is far from the target parking space, the amount of orientation correction is calculated to be smaller. Therefore, even when the orientation deviation of the re-recognized target parking space is large, the orientation deviation can be gradually eliminated with a small amount of correction, thereby avoiding rapid steering in the steering control of the vehicle. Then, as the vehicle moves closer to the target parking space, the amount of orientation correction is gradually brought closer to the amount of orientation deviation, thereby smoothly correcting the orientation, and when the vehicle reaches the target parking space, the orientation of the vehicle can be accurately aligned with the orientation of the target parking space.

Further, the parking space setting unit 51 may calculate an amount of position correction such that the ratio of the amount of position correction to the amount of position deviation is larger as the remaining distance is longer. For example, the parking space setting unit 51 calculates an amount of position correction to be larger in proportion to the remaining distance being longer. Further, when the remaining distance is longer than a predetermined third distance threshold value, the parking space setting unit 51 calculates an amount of position correction to be larger than when the remaining distance is shorter than the predetermined third distance threshold value. The third distance threshold value may be set in a plurality of levels, rather than in one level.

Further, in the present embodiment, a weighting may be set to calculate an amount of correction. The weighting indicates the degree of correction for the amount of deviation of the target parking space. The weighting includes a weighting for position correction and a weighting for orientation correction. The weighting for position correction is a weighting used to calculate an amount of position correction. The weighting for orientation correction is a weighting used to calculate an amount of orientation correction. These weightings are values ranging from 0 to 1.0, for example, values ranging from 0.1 to 1.0. The parking space setting unit 51 sets a weighting for position correction and a weighting for orientation correction depending on the remaining distance. For example, the parking space setting unit 51 determines whether or not the remaining distance is longer than a predetermined first distance threshold value. When the remaining distance is longer than the predetermined first distance threshold value, the parking space setting unit 51 sets a weighting for position correction and a weighting for orientation correction such that the weighting for orientation correction is smaller than the weighting for position correction. Further, when the remaining distance is shorter than the predetermined first distance threshold value, the parking space setting unit 51 sets a weighting for position correction and a weighting for orientation correction such that the weighting for position correction is smaller than the weighting for orientation correction. As a result, in the present embodiment, when the vehicle is far from the target parking space, the position deviation of the target parking space can be corrected more quickly than the orientation deviation.

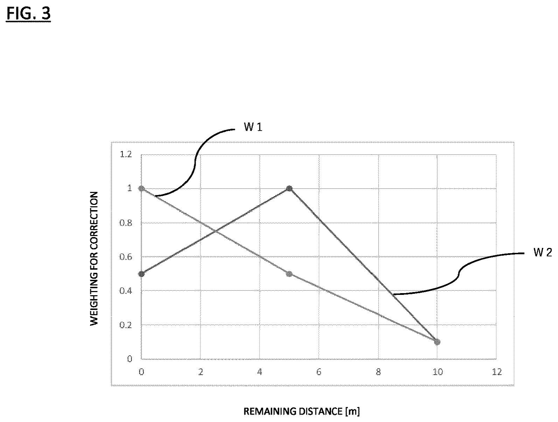

An example of a relationship between the remaining distance and the weightings for position correction and orientation correction will now be described. FIG. 3 illustrates an example of the relationship between the remaining distance and the weightings for position correction and orientation correction. In FIG. 3, the remaining distance ranges from 0 to 10 m. The weighting for correction ranges from 0.1 to 1.0. A weighting W1 for orientation correction is set to be smaller as the remaining distance is longer. As illustrated in FIG. 3, the weighting W1 for orientation correction is set to the maximum value of 1.0 when the remaining distance is zero. Further, as illustrated in FIG. 3, a weighting W2 for position correction is set to be larger as the remaining distance is longer between 0 and 5 m, and is set to be smaller as the remaining distance is longer between 5 and 10 m. The weighting W2 for position correction is set to the maximum value of 1.0 when the remaining distance is 5 m. Note that the numerical values indicated in FIG. 3 are merely examples in the present embodiment, are not essential components of the present invention, and can be set appropriately as necessary.

In FIG. 3, the first distance threshold value is 2.5 m. When the remaining distance is between 0 and 2.5 m, the parking space setting unit 51 sets the weighting W1 for orientation correction and the weighting W2 for position correction such that the weighting W1 for orientation correction is greater than the weighting W2 for position correction. Then, when the remaining distance is between 2.5 and 10 m, the parking space setting unit 51 sets the weighting W1 for orientation correction and the weighting W2 for position correction such that the weighting W1 for orientation correction is smaller than the weighting W2 for position correction. Further, when the remaining distance is shorter than a predetermined fourth distance threshold value, the parking space setting unit 51 may calculate the weighting for position correction such that the weighting for position correction is larger as the remaining distance is longer, and when the remaining distance is longer than the predetermined fourth distance threshold value, the parking space setting unit 51 may calculate the weighting for position correction such that the weighting for position correction is smaller as the remaining distance is longer. For example, in FIG. 3, the fourth distance threshold value is 5 m.

The parking space setting unit 51 calculates amounts of correction using the set weightings. The parking space setting unit 51 calculates an amount of orientation correction based on the amount of orientation deviation and the weighting for orientation correction. For example, the parking space setting unit 51 calculates as an amount of orientation correction a value obtained by multiplying the amount of orientation deviation by the weighting for orientation correction. The parking space setting unit 51 also calculates an amount of position correction based on the amount of position deviation and the weighting for position correction. For example, the parking space setting unit 51 calculates as an amount of position correction a value obtained by multiplying the amount of position deviation by the weighting for position correction.

Based on the amount of position correction and the amount of orientation correction, the parking space setting unit 51 corrects the position and orientation of the target parking space such that the position and orientation of the target parking space before the recalculating is brought closer to the recalculated position and orientation of the target parking space. In the processing of correcting the target parking space, the parking space setting unit 51 calculates a position and orientation of the target parking space based on the position and orientation of the target parking space before the recalculating and based on the amount of orientation correction and the amount of position correction. For example, based on the position of the target parking space before the recalculating and the amount of position correction, the parking space setting unit 51 calculates a position that is corrected by the amount of position correction from the position of the target parking space before the recalculating. For example, based on the orientation of the target parking space before the recalculating and the amount of orientation correction, the parking space setting unit 51 calculates an angle that is corrected by the amount of orientation correction with respect to the orientation of the target parking space before the recalculating. The parking space setting unit 51 corrects the target parking space to the parking space whose position and orientation have been calculated based on the amounts of correction. In this way, the corrected target parking space is set as an intermediate target parking space between the target parking space before updating and the updated target parking space. Note that in the present embodiment, without limitation to correcting both the position and the orientation, either the position or the orientation may be corrected.

As described above, in the present embodiment, while the vehicle is traveling farther than the first distance threshold value (e.g., 2.5 m) from the target parking space, the parking assistance ECU 50 corrects the target parking space in a way that prioritizes correction for the position of the target parking space over correction for the orientation of the target parking space. Then, while the vehicle is traveling closer than the first distance threshold value (e.g., 2.5 m) from the target parking space, the parking assistance ECU 50 corrects the target parking space in a way that prioritizes correction for the orientation of the target parking space over correction for the position of the target parking space.

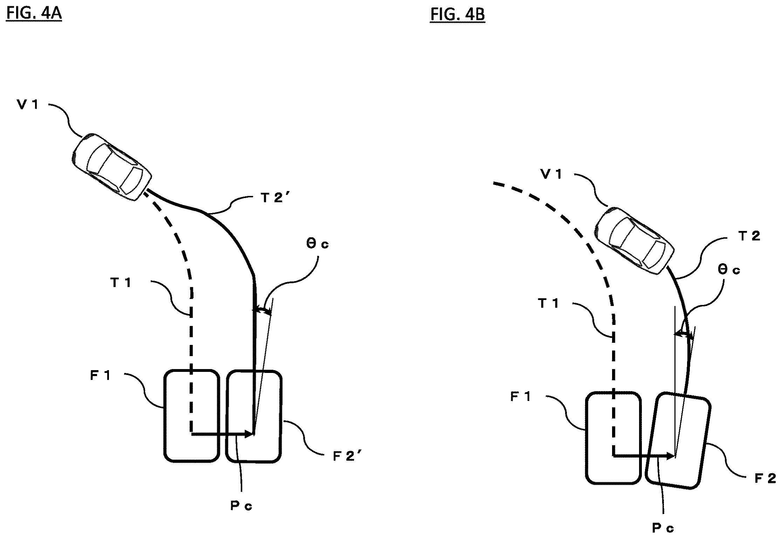

Examples of calculation of a target traveling trajectory performed by the parking assistance method of the present embodiment will now be described with reference to FIGS. 4A and 4B. FIGS. 4A and 4B illustrate examples of calculation of a target traveling trajectory performed by the parking assistance method of the present embodiment. In the present embodiment, a vehicle V1, a target parking space F1, a target traveling trajectory T1, a target parking space F2, an amount of position deviation Pc, and an amount of orientation deviation θc, which are indicated in FIGS. 4A and 4B, are identical to the vehicle V1, the target parking space F1, the target traveling trajectory T1, the target parking space F2, the amount of position deviation Pc, and the amount of orientation deviation θc, which are indicated in FIG. 3. FIGS. 4A and 4B illustrate examples in which, when the target parking space F2 is re-recognized with the amount of position deviation Pc and the amount of orientation deviation θc with respect to the target parking space F1, the position deviation of the target parking space is corrected in priority over the orientation deviation. Specifically, FIG. 4A illustrates an example of calculation of a target traveling trajectory when the position of the target parking space is corrected first, and FIG. 4B illustrates an example of calculation of a target traveling trajectory when the orientation of the target parking space is corrected.

Note that, for ease of understanding, the examples of FIGS. 4A and 4B describe a series of processes in which the position of the target parking space is corrected and then the orientation of the target parking space is corrected. However, the present embodiment is not limited to this as long as the amount of position correction and the amount of orientation correction are adjusted depending on the remaining distance. As illustrated in FIG. 3, when the vehicle is far from the target parking space, the degree of correction for the position deviation of the target parking space may be made greater than the degree of correction for the orientation deviation, and when the vehicle is close to the target parking space, the degree of correction for the orientation deviation of the target parking space may be made greater than the degree of correction for the position deviation.

FIG. 4A illustrates an example of calculation of a target traveling trajectory when the vehicle V1 is traveling far from the target parking space. When the vehicle is traveling far from the target parking space, the target parking space is corrected in a way that prioritizes the position correction over the orientation correction. A target parking space F2' illustrated in FIG. 4A is a target parking space in which only the amount of position deviation (Pc) from the target parking space F1 has been corrected. The orientation of the target parking space F2' is the same as the orientation of the target parking space F1. In the example of FIG. 4A, the parking assistance ECU 50 calculates a target traveling trajectory T2' from the vehicle V1 to the target parking space F2' that has been corrected based on the amount of position correction (Pc). Then, the vehicle V1 moves along the target traveling trajectory T2'. As illustrated in FIG. 4A, when the vehicle is far from the target parking space, the position correction is prioritized over the orientation correction, so that the position deviation of the target parking space can be corrected before the vehicle comes close to the target parking space.

FIG. 4B illustrates an example of calculation of a target traveling trajectory when the vehicle V1 is traveling close to the target parking space. FIG. 4B illustrates a scene when the vehicle comes closer to the target parking space than in the scene illustrated in FIG. 4A. When the vehicle is traveling close to the target parking space, the target parking space is corrected in a way that prioritizes the orientation correction over the position correction. The parking assistance ECU 50 calculates a target traveling trajectory T2 from the current position of the vehicle V1 to the target parking space F2. In the present embodiment, when the target parking space F2 is re-recognized, the amounts of position and orientation deviations from the target parking space F1 are not corrected all at once as illustrated in FIG. 3, but rather, as illustrated in FIGS. 4A and 4B, the position correction is prioritized while the vehicle is far from the target parking space, and the orientation correction is performed after the vehicle comes close to the target parking space.

As described above, in the present embodiment, the amounts of position and orientation correction for the updated target parking space with respect to the target parking space before updating are calculated depending on the distance from the current position of the vehicle to the target parking space, so that it is possible to improve both the accuracy of position correction when the vehicle is far from the target parking space and the accuracy of orientation correction when the vehicle is close to the target parking space.

The parking start position setting unit 52 sets a position at the start of parking assistance processing (hereinafter referred to as the parking start position). For example, when the main switch 40 is operated, the parking start position setting unit 52 acquires the current position of the vehicle at that time, and sets the acquired current position as the parking start position.

The trajectory generation unit 53 generates a traveling trajectory from the current position of the vehicle to the target parking space set by the parking space setting unit 51 (hereinafter referred to as the target traveling trajectory). In this processing of generating a target traveling trajectory, the trajectory generation unit 53 calculates, for example, a curved traveling trajectory from the current position of the vehicle to a turning position, and a curved traveling trajectory from the turning position to the target parking space. The current position of the vehicle may be a position acquired from the navigation system 70, or the parking start position set by the parking start position setting unit 52 may be used. Note that it is not necessary to calculate a target traveling trajectory. Target traveling trajectories determined in advance for parking positions, respectively, may be stored in a memory (ROM), and the target traveling trajectory to a parking position can be read out from this memory. Alternatively, information on a predetermined target traveling trajectory may be acquired through road-to-vehicle communication or vehicle-to-vehicle communication.

Further, when the target parking space is corrected while the vehicle is moving along the target traveling trajectory, the trajectory generation unit 53 acquires the current position of the vehicle at that time, and newly calculates a traveling trajectory from the current position of the vehicle to the corrected target parking space. Then, the trajectory generation unit 53 updates the target traveling trajectory to the newly calculated traveling trajectory. The method for newly calculating a target traveling trajectory can be the same as the above-described method for generating a target traveling trajectory.

The following control unit 54 calculates a target steering angle for the vehicle to follow the target traveling trajectory output from the trajectory generation unit 53, and outputs the target steering angle to the steering angle control unit 61. The steering angle control unit 61 controls the steering angle of the vehicle so that the target steering angle output from the following control unit 54 is achieved.

For example, lateral deviation and yaw angle deviation of the vehicle may occur with respect to the target traveling trajectory. Note that the lateral deviation is a distance between a predetermined position at the center of the vehicle in the width direction and the target traveling trajectory. The yaw angle deviation is an angle of the longitudinal axis of the vehicle with respect to a tangent to a curved portion of the target traveling trajectory, or with respect to a straight portion of the target traveling trajectory.

The following control unit 54 compares the current position of the vehicle with the target traveling trajectory, detects the lateral deviation and yaw angle deviation of the vehicle based on the target traveling trajectory, and performs feedback control so that the detected lateral deviation and yaw angle deviation are reduced or brought below a threshold value, in other words, so that the vehicle follows the target traveling trajectory.

The target speed generation unit 55 calculates a target speed depending on the target traveling trajectory, for example, a target speed that accelerates or decelerates according to the curvature of the target traveling trajectory, and outputs the target speed to the speed control unit 62. The speed control unit 62 controls the speed of the vehicle so that the target speed output from the target speed generation unit 55 is achieved.

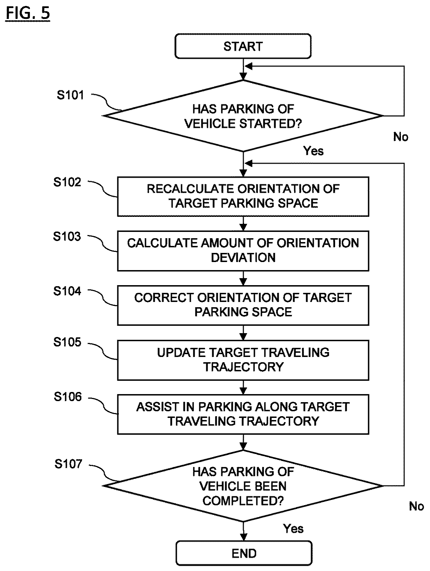

Next, an example of the procedure of the parking assistance method according to the present embodiment will be described with reference to FIG. 5. FIG. 5 is a flowchart illustrating an example of the procedure of the parking assistance method according to the present embodiment. In step S101, the parking assistance ECU 50 determines whether or not the parking of the vehicle has started. For example, when the vehicle reaches the parking start position, the parking assistance ECU 50 determines that the parking of the vehicle has started. When it is determined that the parking of the vehicle has started, the parking assistance ECU 50 proceeds to step S102. If it is determined that the parking of the vehicle has not started, the parking assistance ECU 50 returns to step S101 to repeat the subsequent flow. In step S102, the parking assistance ECU 50 recalculates the orientation of the target parking space. The parking assistance ECU 50 re-recognizes the orientation of the target parking space and calculates the orientation of the re-recognized target parking space. Further, the metrics to be recalculated may include the position and orientation of the target parking space. In step S103, the parking assistance ECU 50 calculates an amount of orientation deviation between the orientation of the target parking space before the recalculating and the orientation of the recalculated target parking space. The amount of deviation may include an amount of position deviation of the target parking space and an amount of orientation deviation of the target parking space.

In step S104, based on the amount of orientation correction for the amount of orientation deviation calculated in step S103, the parking assistance ECU 50 corrects the orientation of the target parking space such that the orientation of the target parking space before the recalculating is brought closer to the recalculated orientation of the target parking space. Further, the amount of correction for the amount of deviation may include an amount of position correction and an amount of orientation correction. In step S105, the parking assistance ECU 50 updates the target traveling trajectory to a traveling trajectory to the target parking space that is corrected based on the amount of orientation correction calculated in step S104. The parking assistance ECU 50 acquires the current position of the vehicle, and calculates a traveling trajectory from the current position of the vehicle to the corrected target parking space. In step S106, the parking assistance ECU 50 assists in parking the vehicle along the target traveling trajectory. For example, the parking assistance ECU 50 controls the traveling of the vehicle so that the vehicle follows the target traveling trajectory. In step S107, the parking assistance ECU 50 determines whether or not the parking of the vehicle has been completed. When it is determined that the parking of the vehicle has been completed, the parking assistance ECU 50 ends the control flow. If it is determined that parking of the vehicle has not been completed, the parking assistance ECU 50 returns to step S102 to repeat the subsequent flow. Thus, in the present embodiment, the target traveling trajectory is repeatedly updated at a constant cycle during parking of the vehicle.

Further, in the present embodiment, parking of the vehicle at a target parking position registered in advance may be assisted. For example, the parking assistance ECU 50 is not limited to assisting in parking the vehicle based on detection of a parking space using a camera, but may acquire information on pre-registered target parking positions from a storage medium, and set a target parking space at an acquired target parking position, thereby performing the parking assistance method according to the present embodiment. The information on parking positions is, for example, overhead images including the surrounding conditions of the parking positions.

Further, in the present embodiment, the parking assistance method according to the present embodiment may be performed not only when the vehicle is moving along a target traveling trajectory from the current position of the vehicle to the target parking space, but also when the vehicle is moving along a traveling trajectory from a turning point where the vehicle switches between forward and reverse to the target parking space in the target traveling trajectory. For example, in the flow illustrated in FIG. 5, when the parking assistance ECU 50 determines in step S101 that the parking of the vehicle has started, the parking assistance ECU 50 performs step S102 and the subsequent steps. Without this limitation, in step S101, the parking assistance ECU 50 may determine whether or not the vehicle has reached a turning position on the target traveling trajectory, and if it determines that the vehicle has reached the turning position on the target traveling trajectory, the parking assistance ECU 50 may perform step S102 and the subsequent steps.

Further, in the present embodiment, the parking assistance ECU 50 may perform the parking assistance method according to the present embodiment in order to park the vehicle in a parking space for perpendicular parking. For example, after setting the target parking space, the parking assistance ECU 50 determines whether or not the target parking space has been set as a parking space for perpendicular parking before performing the process of step S101. If the target parking space has been set as a parking space for perpendicular parking, the parking assistance ECU 50 may perform step S101 and the subsequent steps.

As described above, in the parking assistance method and the parking assistance device according to the present embodiment, a parking assistance ECU recalculates an orientation of a target parking space with respect to a vehicle while the vehicle is moving along a target traveling trajectory; calculates an amount of orientation deviation between the recalculated orientation of the target parking space and the orientation of the target parking space before the recalculating; corrects, based on an amount of orientation correction for the amount of orientation deviation, the orientation of the target parking space so as to bring the orientation of the target parking space closer to the recalculated orientation of the target parking space from the orientation of the target parking space before the recalculating; updates the target traveling trajectory to a traveling trajectory from a current position to the corrected target parking space; and assists in parking the vehicle along the updated target traveling trajectory, wherein a ratio of the amount of orientation correction to the amount of orientation deviation is smaller as a remaining distance from the current position to the target parking space is longer. This makes it possible to avoid rapid steering in the steering control of a vehicle even when a distance from the vehicle to a parking space is long when correcting the vehicle orientation with respect to the parking space after re-recognition.

Further, in the parking assistance method and the parking assistance device according to the present embodiment, the parking assistance ECU recalculates a position of the target parking space with respect to the vehicle while the vehicle is moving along the target traveling trajectory; calculates an amount of position deviation between the recalculated position of the target parking space and the position of the target parking space before the recalculating; corrects, based on an amount of position correction for the amount of position deviation, the position of the target parking space so as to bring the position of the target parking space closer to the recalculated position of the target parking space from the position of the target parking space before the recalculating; updates the target traveling trajectory to a traveling trajectory from a current position to the corrected target parking space; and assists in parking the vehicle along the updated target traveling trajectory, wherein a ratio of the amount of position correction to the amount of position deviation is larger as the remaining distance is longer. This makes it possible to correct the position of the target parking space when the distance from the vehicle to the position of the target parking space is long.

Further, in the parking assistance method and the parking assistance device according to the present embodiment, the parking assistance ECU determines whether or not the remaining distance is longer than a predetermined first distance threshold value; when the remaining distance is longer than the predetermined first distance threshold value, sets a weighting for orientation correction and a weighting for position correction such that the weighting for orientation correction is smaller than the weighting for position correction; calculates an amount of orientation correction using the weighting for orientation correction, and calculates an amount of position correction using the weighting for position correction. This makes it possible to correct the position of the target parking space in priority over the orientation of the target parking space.

Further, in the parking assistance method and the parking assistance device according to the present embodiment, the parking assistance ECU acquires the target parking position from a storage medium, and sets the target parking space at the target parking position. As a result, in parking assistance being performed based on information on a parking position where the vehicle was previously parked, it is possible to avoid rapid steering in the steering control of the vehicle even when a distance from the vehicle to the parking target position is long when correcting the vehicle orientation with respect to the parking target position after re-recognition.

Further, in the parking assistance method and the parking assistance device according to the present embodiment, the parking assistance ECU performs any one of the parking assistance methods described above while the vehicle is moving along a traveling trajectory from a turning point where the vehicle switches between forward and reverse to the target parking space in the target traveling trajectory. As a result, in parking assistance being performed for the vehicle after turning around, it is possible to avoid rapid steering in the steering control of the vehicle even when a distance from the vehicle to the parking target position is long when correcting the vehicle orientation with respect to the parking target position after re-recognition.

Further, in the parking assistance method and the parking assistance device according to the present embodiment, the parking assistance ECU performs any one of the parking assistance methods described above when the target parking space is set as a parking space for perpendicular parking. As a result, in assistance in parking the vehicle for perpendicular parking being performed, it is possible to avoid rapid steering in the steering control of the vehicle even when a distance from the vehicle to the parking target position is long when correcting the vehicle orientation with respect to the parking target position after re-recognition.

Further, in the parking assistance method and the parking assistance device according to the present embodiment, the parking assistance ECU calculates an amount of orientation correction to be smaller in proportion to the remaining distance being longer. This makes it possible to correct the target parking position by a smaller amount when the vehicle is far from the target parking position.

Note that the embodiment described above is described to facilitate understanding of the present invention, and is not described to limit the present invention. Therefore, the elements disclosed in the above-described embodiment are meant to include all design changes and equivalents that fall within the technical scope of the present invention. Furthermore, the components described in the above-described embodiment may be appropriately combined as necessary, and the combinations of the components are not particularly limited.

### Description of Reference Numerals

- 100: Parking assistance device
- 50: Parking assistance ECU
- 51: Parking space setting unit
- 52: Parking start position setting unit
- 53: Trajectory generation unit
- 54: Following control unit
- 55: Target speed generation unit

## Claims

1. A parking assistance method performed by a controller to assist in parking a vehicle along a target traveling trajectory from a current position of the vehicle to a target parking space where the vehicle is to be parked, the parking assistance method comprising, by the controller:
recalculating an orientation of the target parking space with respect to the vehicle while the vehicle is moving along the target traveling trajectory;
calculating an amount of orientation deviation between the recalculated orientation of the target parking space and the orientation of the target parking space before the recalculating;
correcting, based on an amount of orientation correction for the amount of orientation deviation, the orientation of the target parking space so as to bring the orientation of the target parking space closer to the recalculated orientation of the target parking space from the orientation of the target parking space before the recalculating;
updating the target traveling trajectory to a traveling trajectory from the current position to the corrected target parking space; and
assisting in parking the vehicle along the updated target traveling trajectory,
wherein a ratio of the amount of orientation correction to the amount of orientation deviation is smaller as a remaining distance from the current position to the target parking space is longer.

2. The parking assistance method according to claim 1, comprising, by the controller:
recalculating a position of the target parking space with respect to the vehicle while the vehicle is moving along the target traveling trajectory;
calculating an amount of position deviation between the recalculated position of the target parking space and the position of the target parking space before the recalculating;
correcting, based on an amount of position correction for the amount of position deviation, the position of the target parking space so as to bring the position of the target parking space closer to the recalculated position of the target parking space from the position of the target parking space before the recalculating;
updating the target traveling trajectory to a traveling trajectory from the current position to the corrected target parking space; and
assisting in parking the vehicle along the updated target traveling trajectory,
wherein a ratio of the amount of position correction to the amount of position deviation is larger as the remaining distance is longer.

3. The parking assistance method according to claim 2, comprising, by the controller:
determining whether or not the remaining distance is longer than a predetermined first distance threshold value;
when the remaining distance is longer than the predetermined first distance threshold value, setting a weighting for position correction and a weighting for orientation correction such that the weighting for orientation correction is smaller than the weighting for position correction;
calculating the amount of orientation correction using the weighting for orientation correction; and
calculating the amount of position correction using the weighting for position correction.

4. The parking assistance method according to any one of claims 1 to 3, wherein
the parking assistance method is a parking assistance method for assisting in parking the vehicle at a pre-registered target parking position, and
the parking assistance method comprises, by the controller:
acquiring the target parking position from a storage medium; and
setting the target parking space at the target parking position.

5. A parking assistance method, wherein the controller performs the parking assistance method according to any one of claims 1 to 4 while the vehicle is moving along a traveling trajectory from a turning point where the vehicle switches between forward and reverse to the target parking space in the target traveling trajectory.

6. A parking assistance method, wherein the controller performs the parking assistance method according to any one of claims 1 to 5 when the target parking space is set as a parking space for perpendicular parking.

7. The parking assistance method according to any one of claims 1 to 6, comprising by the controller, calculating the amount of orientation correction to be smaller in proportion to the remaining distance being longer.

8. A parking assistance device comprising a controller configured to assist in moving a vehicle along a target traveling trajectory from a current position of the vehicle to a target parking space where the vehicle is to be parked, wherein the controller is configured to:
recalculate an orientation of the target parking space with respect to the vehicle while the vehicle is moving along the target traveling trajectory;
calculate an amount of orientation deviation between the recalculated orientation of the target parking space and the orientation of the target parking space before the recalculating;
correct, based on an amount of orientation correction for the amount of orientation deviation, the orientation of the target parking space so as to bring the orientation of the target parking space closer to the recalculated orientation of the target parking space from the orientation of the target parking space before the recalculating;
update the target traveling trajectory to a traveling trajectory from the current position to the corrected target parking space; and
assist in parking the vehicle along the updated target traveling trajectory,
wherein a ratio of the amount of orientation correction to the amount of orientation deviation is smaller as a remaining distance from the current position to the target parking space is longer.
